# EUROPEAN PATENT SPECIFICATION

(11) **EP 0 718 149 B1**
(45) Date of publication and mention of the grant of the patent: **06.05.1999**
(21) Application number: 95112115.1
(22) Date of filing: 02.08.1995
(51) Int. Cl.: B60P 3/08

(54) **Combination including a vehicle with superposed platforms for transporting motor vehicles**
Kombination beinhaltend ein Fahrzeug mit übereinander angeordneten Plattformen zum Transport von Motorfahrzeugen
Combinaison comprenant un véhicule à plate-formes superposées pour le transport de véhicules motorisés

(30) Priority: 23.12.1994 IT TO941071
(43) Date of publication of application: 26.06.1996
(73) Proprietor: ROLFO S.p.A., I-12042 Bra (Cuneo) (IT)
(72) Inventor: Rolfo, Giorgio, I-12042 BRA (Cuneo) (IT)
(74) Representative: Saconney, Piero

(56) References cited:
- EP-A- 0 001 364
- EP-A- 0 183 632
- EP-A- 0 418 178
- EP-A- 0 464 241
- DE-A- 2 456 292
- FR-A- 2 148 069
- US-A- 3 104 127
- PATENT ABSTRACTS OF JAPAN vol. 10 no. 301 (M-525) [2357] ,14 October 1986 & JP-A-61 115743 (HAMANA JIDOSHA) 3 June 1986,

## Description

The present invention relates to vehicles for transporting motor vehicles and more particularly to a combination comprising a transport vehicle with superposed platforms and at least one motor vehicle carried or adapted to be carried on an upper platform of the transport vehicle, according to the preamble of claim 1.

A combination according to the preamble of claim 1 is known from the document FR-A-2 148 069.

In this known combination the transport vehicle, which is a railway wagon for transporting lorries or other heavy motor vehicles, has an upper platform which can be moved forwardly and rearwarly and can be inclined for the purpose of exploiting in the best possible manner the space available to the lorries or other heavy vehicles loaded on a lower platform and on the upper platform.

In a vehicle of the type in question known from the documents IT-U-126 892 and IT-U-202 376, amongst many, both the front lifting means and the rear lifting means are incorporated in respective front and rear pairs of vertical pillars which frame an upper platform.

In a vehicle, particularly a lorry tractor unit, of the type in question known from the document EP-A-0 024 265, amongst others, an upper platform is supported at the front by a pair of vertical pillars which incorporate the front means for lifting the platform.

In vehicles with superposed platforms in which an upper platform is framed by a pair of pillars, the problem described below often occurs.

The motor cars or other motor vehicles are generally loaded onto the upper platform by a driver who, once the motor vehicle is loaded in the correct position, has to open the door in order to get out. It often happens that the door is adjacent a pillar. In this situation, when the driver opens the door he risks knocking it against the pillar and damaging it and he also risks injuring himself since he has to perform abnormal movements in order to pass through the partially closed door. The driver's exit from the vehicle is even more difficult if the operation takes place in adverse weather conditions.

In known motor vehicle transporters of the type in question, in order to transfer motor vehicles between the ground and an inclined upper platform and, for example, between two aligned upper platforms such as those of a trailer and of a tractor during loading and unloading, use is made of small extendible connecting platforms or bridges which it would be desirable to eliminate in order to reduce construction costs.

The object of the present invention is to provide a combination including a transport vehicle which does not have the disadvantage of the difficulty in opening the doors of loaded motor vehicles and which enables the transfer between the ground and a platform and between two platforms to be carried out without the use of retractable platforms or bridges.

According to the invention, this object is achieved by a combination as claimed.

The claimed combination makes use of one or more slidable upper platforms to solve a problem which was not contemplated in the document FR-A-2 148 069.

By solving this problem the invention achieves the following advantages:
- if the position assigned to a motor vehicle on the upper platform is such that its door on the driver's side corresponds with a pillar, the platform can be positioned in the retracted or forward position during loading or unloading so that the driver can open the door in order to get out of or into the vehicle;
- the upper platform which is inclined for the loading and unloading of the vehicles can be retracted to bring its rear edge close to the ground in order to link it with a loading ramp disposed on the ground; moreover, in the case of a lorry and trailer, the upper platform of the trailer can be moved forwards to bring its front edge close to the rear edge of the corresponding platform of the tractor (or vice versa) to enable vehicles to pass from one platform to the other without the use of an intermediate retractable bridge or platform.

The invention will become clearer from a reading of the following detailed description, given with reference to the appended drawings, provided purely by way of non-limiting example, in which:
Figure 1 is a side elevational view of a road trailer with two movable upper platforms both according to the invention,
Figure 2 is a perspective view showing, in detail, a region of the connection of the two platforms of Figure 1 to a pillar as indicated, without distinction, by one of the arrows II of Figure 1,
Figure 3 is a partial transverse section taken, without distinction, in one of the planes III-III of Figure 2,
Figure 4 is a fragmentary perspective view showing certain internal details in the region indicated, without distinction, by one of the arrows IV of Figure 2,
Figure 5 is a partial longitudinal section taken, without distinction, in one of the planes indicated V-V in Figure 2, showing a locating system, and
Figures 6, 7, 8 and 9 are schematic side elevational views showing various loading situations.

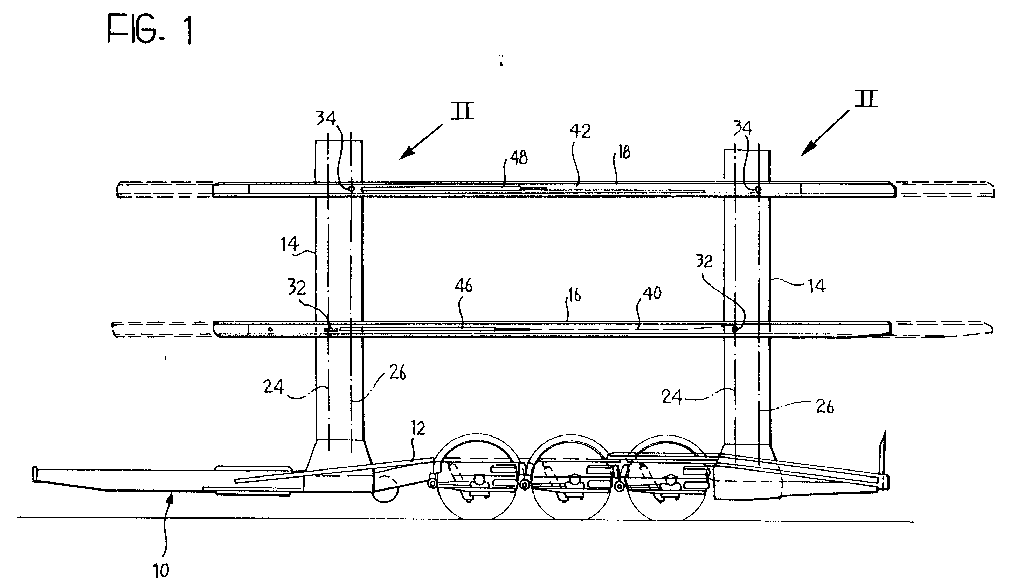

With reference to Figure 1, a road trailer for transporting motor vehicles comprises a chassis 10 with a lower load platform 12.

Two identical pairs of front and rear pillars 14 extend upwards from the chassis 10.

Two movable upper platforms 16 and 18 associated with the pillars 14 are disposed one above the other and above the fixed lower platform 12.

As will be explained further below, the two upper platforms 16 and 18 are movable at will between raised and lowered horizontal positions and inclined positions for loading and unloading operations.

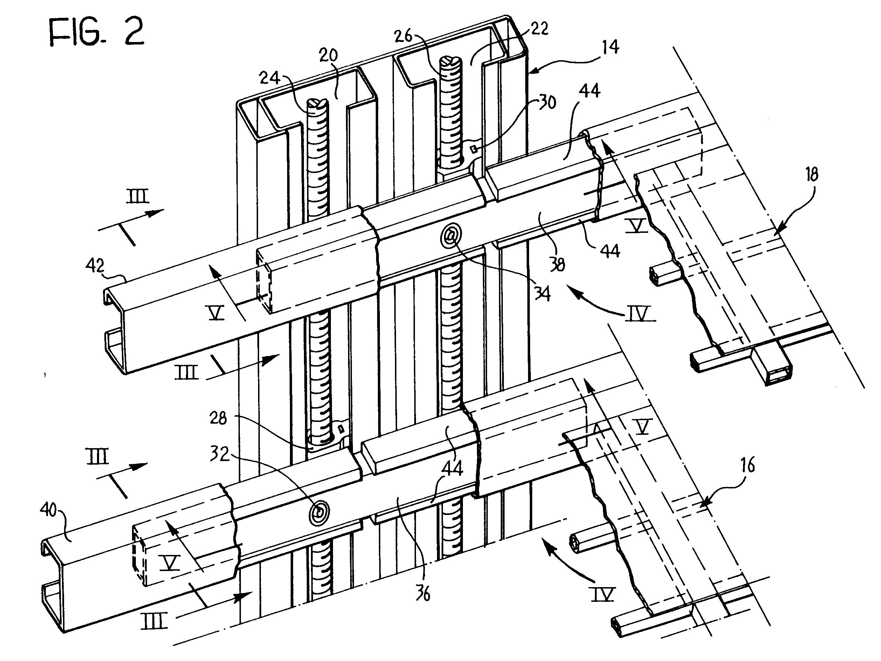

As shown in Figure 2, the pillars 14 are channel-shaped in horizontal section.

With reference now to Figure 2 and, for certain details, also to Figure 1, in the case shown of a vehicle with two upper platforms 16, 18, each pillar 14 incorporates a pair of profiled sections 20, 22 with channel-shaped horizontal sections.

Lifting means disposed in each of these sections 20, 22 comprise respective worm screws 24, 26 with vertical axes driven in known manner by hydraulic motors or the like (not shown).

In each of the four pillars 14 a lead nut 28 associated with the underlying upper platform 16 is fitted on each worm screw 24. Moreover, in each of the pillars 14,a respective lead nut 30 associated with the top upper platform 18 is coupled with each worm screw 26.

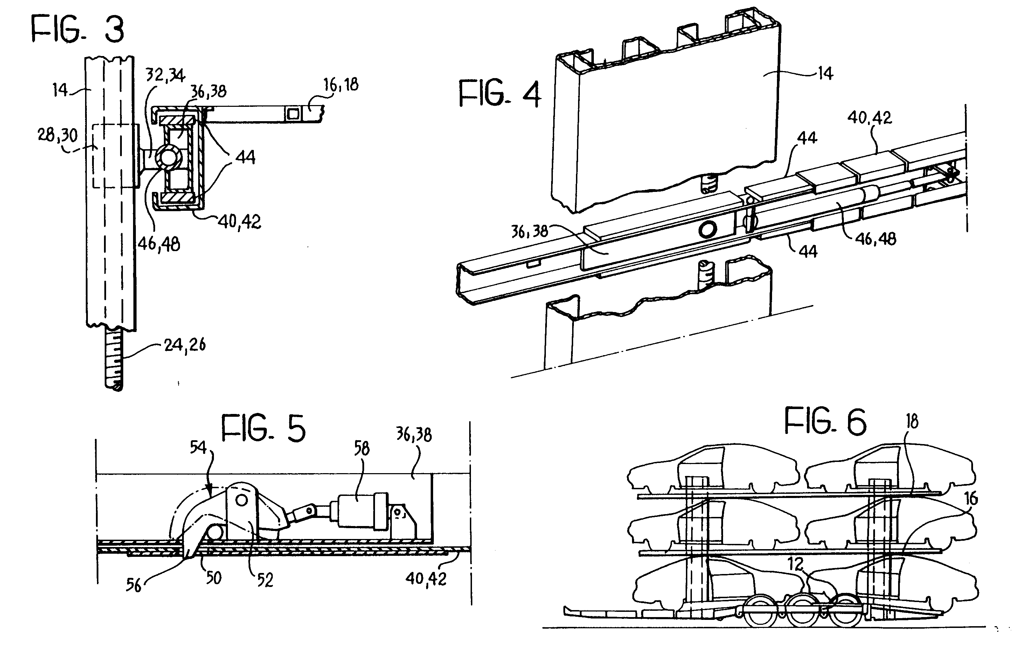

As can best be seen in Figure 3, a respective horizontal transverse pin 32, 34, fixed to each lead nut 28, 30 projects towards the respective platform 16, 18. According to the invention, a sliding guide member 36 or 38 respectively, in the form of a prismatic box-like element, is engaged on each pin 32, 34.

Each upper platform 16, 18 comprises a respective pair of side members 40, 42 constituted by channel-sections. These sections 40, 42 surround the respective prismatic elements 36, 38 and their flanges are turned over towards one another and define a slot for the passage of the respective pin 32, 34 between them. The sections 40, 42 constitute tracks for the longitudinal sliding of the platforms 16, 18 on the prismatic elements 36, 38.

To facilitate sliding, each prismatic element 36, 38 has sliding blocks 44 of material with a low coefficient of friction such as polyamide or polytetrafluoroethylene which engage at least the upper and lower flanges of the respective channel sections 40, 42.

By virtue of the sliding coupling between the tracks 40, 42 and the guide members 36,38 each upper platform 16, 18 can be moved between a position in which it is centred longitudinally above the lower platform for movement of the vehicle, and a forward position and/or a retracted position.

In Figure 1, the two platforms 16 and 18 are shown in continuous outline in the centred position and in broken outline in the forward position (on the left) and in the retracted position (on the right).

Means, in the form of a pair of actuators, indicated 46, 48 in Figures 1 and 4, for each platform 16, 18, are provided for bringing about these movements.

As shown in Figure 4, each actuator 46, 48 is in the form of a jack or other fluid actuator with a piston and a cylinder, connected to the respective guide member 36, 38 at one end and to the respective track 40, 42 at its other end.

The two jacks 46, 48 associated with each platform 16, 18 are driven in unison.

A locating device is also preferably associated with each platform 16, 18 and serves to lock it releasably at least in the centred position for movement of the vehicle.

A preferred locating device is shown in Figure 5.

With reference to Figure 5, one of the tracks 40, 42 of each platform 16, 18 has an opening 50. A bracket 52 fixed in the respective guide member 36, 38 carries a pivoting pawl 54 with a tip 56.

An actuator 58, for example, of the pneumatic type, associated with the pawl 54 serves to bring about the movements of the pawl 54 in senses for the engagement of the tip 56 in the opening 50 and for its disengagement therefrom. The pawl 54 is shown in continuous outline in the engagement position and in chain line in the disengagement position.

Figure 6 shows the trailer of Figure 1 in the transportation condition in which each of the three platforms 12, 16 and 18, which are arranged horizontally, carries two motor cars. The two upper platforms 16 and 18 are spaced apart vertically and both are in the centred transportation position.

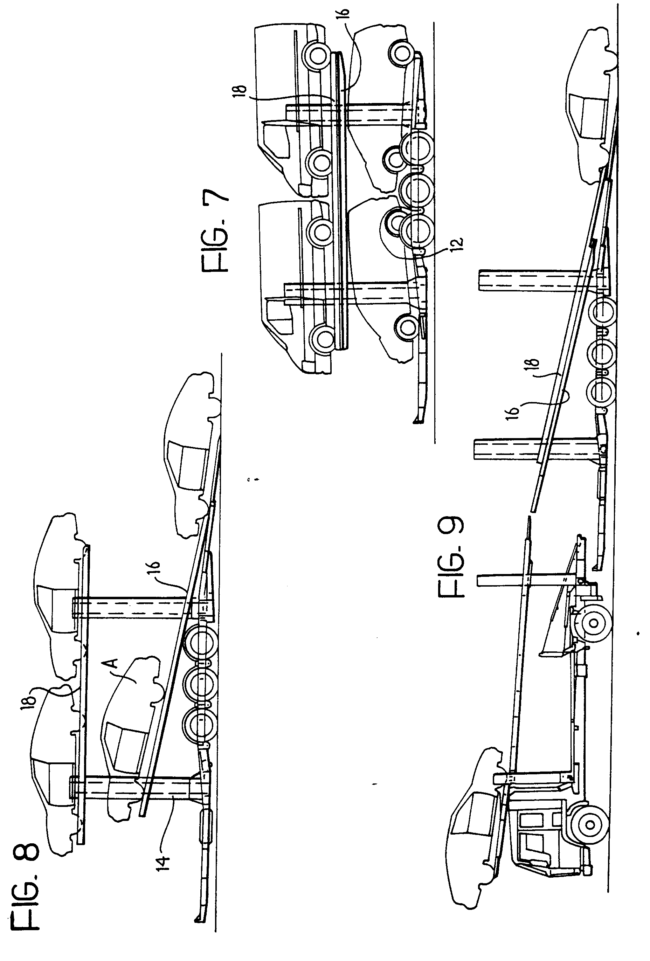

In Figure 7, the same trailer transports two "single-space" motor vehicles on the lower platform whilst the top upper platform 18 carries two vans. The underlying upper platform 16 is fitted against the other, overlying upper platform 18.

In Figure 8, the top upper platform 18 has already been raised to the centred transportation position and carries two motor cars; the lower upper platform 16, on the other hand, is inclined rearwardly and is in the retracted position. In this retracted position, its rear end acts as a loading ramp for the motor cars.

Also in Figure 8 a motor car indicated A has already been loaded onto the front portion of the platform 16 to its final position on this platform. Since the platform 16 is in the retracted position, as can be seen, the door on the driver's side of the motor car does not interfere with the adjacent front pillar 14 so that this door can be opened wide which would not be possible, however, in the transportation position shown in Figure 6.

In Figure 9, the trailer is associated with a tractor. The two upper platforms 16, 18 of the trailer are inclined and fitted together. The top platform 18 is in the retracted position to act as a loading ramp as in Figure 8, whilst the lower upper platform 16 is in the forward position in which its front end (on the left in the drawing) is linked with the rear end of the upper platform of the tractor.

A motor car can thus move along a substantially continuous track between the rear end of the semi-trailer and the front end of the tractor.

The invention is not limited to the specific details shown in the drawings. Thus, for example, the lifting means shown as worm screws and respective lead nuts could be constituted by jacks, hoists, etc.

Moreover, the sliding guide members shown in the form of prismatic elements could consist of wheels, rollers, etc.

The invention is applicable not only to road vehicles such as trailers, semi-trailers and tractors but also to vehicles of other types, for example, railway wagons having one or more upper platforms.

Furthermore, the invention is applicable to vehicles such as, for example, the tractor of the document EP-A-0 024 265 in which only the front pillars are of the type shown in the drawings appended to the present description and the rear lifting means are constituted by a calliper system.

## Claims

1. A combination comprising:
- a transport vehicle with superposed platforms for transporting motor vehicles, comprising a lower platform (12) and at least one upper platform (16, 18) in which the or each upper platform (16, 18) is supported laterally, adjacent its two ends, by respective front and rear lifting means (24, 26; 26, 30) carried by the chassis (10) of the vehicle and enabling the or each upper platform (16, 18) to be positioned in raised and lowered horizontal positions relative to the lower platform (12) and in an inclined position for loading and unloading operations, at least the front or rear lifting means are incorporated in a pair of vertical pillars (14) which frame the or each upper platform (16, 18), the or each upper platform (16, 18) is articulated to the front and rear lifting means by means of respective horizontal transverse pins (32, 34) to enable the platform to pivot, each pin (32, 34) of the lifting means carries a sliding guide member (36, 38), the or each upper platform (16, 18) has a pair of lateral tracks (40, 42) engaged slidingly by the respective guide members (36, 38) so as to enable the platform to move in the longitudinal direction of the transport vehicle, and means (46, 48) are provided for bringing about the longitudinal movements of the or each upper platform; and
- at least one motor vehicle having a door on the driver's side and carried or adapted to be carried in an assigned position on the upper platform or on one of the upper platforms (16, 18),
characterised in that the or each upper platform (16, 18) is movable, in the longitudinal direction of the vehicle, between a position in which it is centred longitudinally above the lower platform (12) for movement of the transport vehicle and in which the said door of the motor vehicle in the said assigned position corresponds to an adjacent pillar and cannot be opened wide, and a forward position and/or a retracted position in which the said door does not interfere with the said adjacent pillar and can be opened wide.

2. A combination according to Claim 1, characterised in that each sliding guide member is a prismatic element (36, 38) and the respective track is constituted by a channel section (40, 42) which surrounds the respective prismatic element (36, 38) and the flanges of which are turned over towards one another to define a slot for the passage of the respective pin (32, 34) between them.

3. A combination according to Claim 2, characterised in that each prismatic element (36, 38) has sliding blocks (44) of material with a low coefficient of friction which engage at least the flanges of the channel section (40, 42).

4. A combination according to any one of Claims 1 to 3, characterised in that the means for bringing about the movements of the or each upper platform 16, 18) are constituted by one or more fluid actuators (46, 48) with pistons and cylinders connected to one of the guide members (36, 38) at one end and to the respective track (40, 42) at the other end.

5. A combination according to any one of the preceding claims, characterised in that a locating device (54) is associated with the or each upper platform (16, 18) and serves to lock it releasably at least in the centred position.

6. A combination according to Claim 4, characterised in that the locating device comprises an opening (50) formed in one of the tracks (40, 42), a pawl (54) mounted on the guide member (36, 38) and having a tip (56) which can be inserted in the opening (50), and an actuator (58) operable in order to bring about the movements of the pawl (54) in senses for the engagement of the tip (56) in the opening (50) and for its disengagement therefrom.

## Patentansprüche

1. Kombination, die enthält:
- ein Transportfahrzeug mit übereinanderliegenden Bühnen für den Transport von Kraftfahrzeugen, wobei das Transportfahrzeug eine Unterbühne (12) sowie zumindest eine Oberbühne (16, 18) besitzt, wobei die eine oder jede Oberbühne (16, 18) seitlich neben ihren beiden Enden in einer entsprechenden vorderen und hinteren Hebevorrichtung (24, 26; 26, 30) gelagert ist, die vom Chassis (10) des Fahrzeugs getragen wird und durch die die eine oder jede Oberbühne (16, 18) in einer angehobenen und einer abgesenkten horizontalen Stellung relativ zur Unterbühne (12) sowie in einer geneigten Stellung angeordnet werden kann, um Be- und Entladevorgänge durchzuführen, wobei zumindest die vordere oder die hintere Hebevorrichtung in einem Paar von vertikalen Stützen (14) enthalten sind, die die eine oder jede Oberbühne (16, 18) einrahmen, wobei die eine oder jede Oberbühne (16, 18) an der vorderen und der hinteren Hebevorrichtung in entsprechenden horizontalen Querzapfen (32, 34) gelenkig gelagert ist, damit sich die Bühne verschwenken kann, wobei jeder Zapfen (32, 34) der Hebevorrichtung ein verschiebbares Führungselement (36, 38) trägt, wobei die eine oder jede Oberbühne (16, 18) ein Paar von seitlichen Führungsbahnen (40, 42) besitzt, in die die entsprechenden Führungselemente (36, 38) gleitend eingreifen, damit sich die Bühne in Längsrichtung des Transportfahrzeugs bewegen kann, und wobei eine Vorrichtung (46, 48) vorgesehen ist, um die Längsbewegungen der einen oder jeder Oberbühne zu erzeugen; und
- zumindest ein Kraftfahrzeug, das eine Türe auf der Fahrerseite besitzt und das in einer zugewiesenen Stellung auf der Oberbühne oder auf einer der Oberbühnen (16, 18) getragen wird oder getragen werden kann,
dadurch gekennzeichnet, dass die eine oder jede Oberbühne (16, 18) in der Längsrichtung des Fahrzeugs zwischen einer Stellung, in der sie in Längsrichtung in der Mitte über der Unterbühne (12) liegt, wenn das Fahrzeug fährt, und in der die Türe des Kraftfahrzeugs in der zugewiesenen Stellung mit einer benachbarten Stütze übereinstimmt und nicht weit geöffnet werden kann, sowie einer vorderen Stellung und/oder einer zurückgezogenen Stellung bewegt werden kann, in der diese Türe nicht an die benachbarte Stütze stößt und weit geöffnet werden kann.

2. Kombination gemäß Anspruch 1, dadurch gekennzeichnet, dass jedes verschiebbare Führungselement ein prismenförmiges Element (36, 38) ist, wobei die entsprechende Führungsbahn von einem Kanalteil (40, 42) gebildet wird, der das entsprechende prismenförmige Element (36, 38) umgibt und dessen Flansche zueinander gebogen sind, um einen Schlitz zu bilden, um den entsprechenden Zapfen (32, 34) dazwischen durchzulassen.

3. Kombination gemäß Anspruch 2, dadurch gekennzeichnet, dass jedes prismenförmige Element (36, 38) Gleitblöcke (44) aus einem Material mit einem niedrigen Reibungskoeffizienten besitzt, die zumindest in die Flansche des Kanalteils (40, 42) eingreifen.

4. Kombination gemäß irgendeinem der Ansprüche 1 bis 3, dadurch gekennzeichnet, dass die Vorrichtung, um die Bewegungen der einen oder jeder Oberbühne (16, 18) zu erzeugen, von einem oder mehreren hydraulischen Stellgliedern (46, 48) mit Kolben und Zylindern gebildet wird, die an einem Ende mit den Führungselementen (36, 38) und am anderen Ende mit der entsprechenden Führungsbahn (40, 42) verbunden sind.

5. Kombination gemäß irgendeinem der bisherigen Ansprüche, dadurch gekennzeichnet, dass der einen oder jeder Oberbühne (16, 18) eine Einstellvorrichtung (54) zugeordnet ist, die dazu dient, um die Bühne zumindest in der Mittelstellung freigebbar zu verriegeln.

6. Kombination gemäß Anspruch 4, dadurch gekennzeichnet, dass die Einstellvorrichtung eine Öffnung (50), die in einer der Führungsbahhen (40, 42) ausgebildet ist, eine Sperrklinke (54), die am Führungselement (36, 38) befestigt ist und eine Spitze (56) besitzt, die in die Öffnung (50) eingesetzt werden kann, sowie ein Stellglied (58) enthält, das betätigt werden kann, um die Bewegungen der Sperrklinke (54) nach Wunsch zu erzeugen, um die Spitze (56) in die Öffnung (50) einzurasten oder aus dieser auszurasten.

## Revendications

1. Une combinaison comprenant:
- un véhicule de transport ayant des plates-formes superposées pour transporter des véhicules automobiles, comprenant une plate-forme inférieure (12) et au moins une plate-forme supérieure (16, 18), dans laquelle la ou chaque plate-forme supérieure (16, 18) est supportée latéralement, de manière adjacente à ses deux extrémités, par des moyens de levage avant et arrière (24, 26; 26, 30) respectifs supportés par le châssis (10) du véhicule et permettant à la ou à chaque plate-forme supérieure (16, 18) d'être placés dans des positions horizontales levée et abaissée par rapport à la plate-forme inférieure (12) et dans une position inclinée pour effectuer des opérations de chargement et de déchargement, au moins les moyens de levage avant ou arrière sont incorporés dans un couple de montants verticaux (14) qui encadrent la ou chaque plate-forme supérieure (16, 18), la où chaque plate-forme supérieure (16, 18) est articulée par rapport aux moyens de levage avant et arrière, au moyen de tiges transversales horizontales (32, 34) respectives pour permettre à la plate-forme de pivoter, chaque tige (32, 34) des moyens de levage supporte un organe de guidage coulissant (36, 38), la où chaque plate-forme supérieure (16, 18) présente un couple de pistes latérales (40, 42) mises en prise avec coulissement par les organes de guidage (36, 38) respectives, de manière à permettre à la plate-forme de se déplacer dans la direction longitudinale du véhicule de transport, et des moyens (46, 48) sont prévus pour permettre les déplacements longitudinaux de la ou de chaque plate-forme supérieure; et
- au moins un véhicule automobile, ayant une porte du côté du conducteur et transporté ou adapté de façon à être transporté dans une position attribuée sur la plate-forme supérieure ou sur l'une des plates-formes supérieures (16, 18),
caractérisée en ce que la ou chaque plate-forme supérieure (16, 18) est déplaçable dans la direction longitudinale du véhicule, entre une position dans laquelle elle est centrée longitudinalement au-dessus de la plate-forme inférieure (12) pour le déplacement du véhicule de transport et dans laquelle ladite porte du véhicule automobile dans ladite position attribuée correspond à un montant adjacent et ne peut pas être ouverte en grand et une position avant et/ou une position rétractée, dans laquelle ladite porte n'interfère pas avec ledit montant adjacent et peut être ouverte en grand.

2. Une combinaison selon la revendication 1, caractérisée en ce que chaque organe de guidage coulissant est un élément prismatique (36, 38) et la piste respective est constituée d'une section de canal (40, 42), qui entoure l'élément prismatique (36, 38) respectif et dont les brides sont renversées l'une vers l'autre pour définir une fente pour le passage de la tige (32, 34) respective entre elles.

3. Une combinaison selon la revendication 2, caractérisée en ce que chaque élément prismatique (36, 38) présente des blocs coulissants (44) d'un matériau ayant un faible coefficient de friction, qui s'engagent au moins contre les brides de la section de canal (40, 42).

4. Une combinaison selon l'une quelconque des revendications 1 à 3, caractérisée en ce que les moyens permettant les déplacements de la ou de chaque plate-forme supérieure (16, 18) sont constitués d'un ou plusieurs actionneurs fluidiques (46, 48) avec des pistons et des cylindres reliés à l'un des organes de guidage (36, 38) à une extrémité et à la piste (40, 42) respective à l'autre extrémité.

5. Une combinaison selon l'une quelconque des revendications précédentes, caractérisée en ce qu'un dispositif de positionnement (54) est associé à la ou à chaque plate-forme supérieure (16, 18) et sert à la bloquer de façon amovible au moins dans la position centrée.

6. Une combinaison selon la revendication 4, caractérisée en ce que le dispositif de positionnement comprend une ouverture (50) formée dans l'une des pistes (40, 42), un cliquet (54), monté sur l'organe de guidage (36, 38) et ayant une pointe (56) qui peut être insérée dans l'ouverture (50), et un actionneur (58) susceptible de fonctionner pour permettre les déplacements du cliquet (54) dans les directions d'engagement de la pointe (56) dans l'ouverture (50) et de son dégagement de cette dernière.
